# EUROPÄISCHE PATENTANMELDUNG

(11) **EP 4 736 619 A1**
(43) Veröffentlichungstag der Anmeldung: **06.05.2026**
(21) Anmeldenummer: 24209913.3
(22) Anmeldetag: 30.10.2024
(51) Int. Cl.: A01C 7/20, A01C 15/00

(54) **LANDWIRTSCHAFTLICHE VERTEILMASCHINE MIT MODULAREM TANKSYSTEM**

(71) Anmelder: Kverneland Group Soest GmbH, 59494 Soest (DE)
(72) Erfinder: Kottenstedde, Gregor, 59494 Soest (DE); Schumacher, Ferdinand, 59494 Soest (DE); Kühle, Mirco, 59494 Soest (DE); Tigges, Matthias, 59494 Soest (DE); Schwichtenhövel, Judith, 59494 Soest (DE)
(74) Vertreter: Bittner, Thomas L.

(57) **Zusammenfassung**

Die Erfindung betrifft eine landwirtschaftliche Verteilmaschine (1) mit modularem Tanksystem, aufweisend: einen Hauptrahmen (6), bei dem Rahmenmodule (5.1, ..., 5.4) lösbar miteinander verbunden sind; eine Zugvorrichtung (8), die an ein Zugfahrzeug koppelbar ist; eine Tankanordnung mit getrennten Tanks (4.1, ..., 4.2) für zu verteilendes Material wie Saatgut, Düngermaterial oder dergleichen; und eine die Tankanordnung umfassende Anordnung von Tank-Rahmen-Modulen (3.1, ..., 3.4), bei denen jeweils ein Tank der Tankanordnung auf einem zugeordneten Rahmenmodul des Hauptrahmens angeordnet ist. Zumindest ein erstes Tank-Rahmen-Modul ist aus der Anordnung von Tank-Rahmen-Modulen herauslösbar, derart, dass nach dem Herauslösen eine verkürzte Anordnung von einem oder mehreren verbleibenden Tank-Rahmen-Modulen ausbildbar ist, wobei hierbei der Hauptrahmen mit der hiermit verbundenen Zugvorrichtung frei von einem ersten Rahmenmodul (5.1) gebildet ist.

## Beschreibung

Die Erfindung betrifft eine landwirtschaftliche Verteilmaschine mit modularem Tanksystem.

### Hintergrund

Landwirtschaftliche Verteilmaschinen dienen dazu, einen oder mehrere zu verteilende Materialien im landwirtschaftlichen Betrieb auszubringen oder zu verteilen, beispielsweise Saatgut, Düngermaterial oder dergleichen. Sind mehrere unterschiedliche Materialen zu verteilen, kann die landwirtschaftliche Verteilmaschine mit getrennten Tanks gebildet sein, die jeweils der Aufnahme eines zu verteilenden Materials dienen. So kann vorgesehen sein, mittels einer Sämaschine sowohl Saatgut wie auch Düngematerial auszubringen. Saatgut und Düngematerial sind dann in getrennten Tanks der Sämaschine aufzunehmen.

### Zusammenfassung

Aufgabe der Erfindung ist es, eine landwirtschaftliche Verteilmaschine mit modularem Tanksystem zu schaffen, die flexibel für unterschiedliche Anwendungsaufgaben einrichtbar ist.

Gelöst wird die Aufgabe durch eine landwirtschaftliche Verteilmaschine mit modularem Tanksystem nach unabhängigem Anspruch 1. Ausgestaltungen sind Gegenstand von abhängigen Unteransprüchen.

Nach einem Aspekt ist eine landwirtschaftliche Verteilmaschine mit modularem Tanksystemgeschaffen, welche Folgendes aufweist: einen Hauptrahmen, bei dem Rahmenmodule lösbar miteinander verbunden sind; eine Zugvorrichtung, die an ein Zugfahrzeug koppelbar und mit dem Hauptrahmen verbunden ist, derart, dass eine Zugkraft über die Zugvorrichtung auf den Hauptrahmen einleitbar ist; eine Tankanordnung, die mit getrennten Tanks gebildet ist, die jeweils eingerichtet sind, ein zu verteilendes Material wie Saatgut, Düngematerial oder dergleichen aufzunehmen; und eine die Tankanordnung umfassende Anordnung von Tank-Rahmen-Modulen, bei denen jeweils ein Tank der Tankanordnung auf einem zugeordneten Rahmen-modul des Hauptrahmens angeordnet ist. Zumindest ein erstes Tank-Rahmen-Modul, bei dem ein erster Tank der Tankanordnung auf einem zugeordneten ersten Rahmenmodul des Hauptrahmens angeordnet ist, ist aus der Anordnung von Tank-Rahmen-Modulen herauslösbar, derart, dass nach dem Herauslösen des zumindest einen ersten Tank-Rahmen-Moduls eine verkürzte Anordnung von einem oder mehreren verbleibenden Tank-Rahmen-Modulen frei von den zumindest einen ersten Tank-Rahmen-Modul ausbildbar ist, wobei hierbei der Hauptrahmen mit der hiermit verbundenen Zugvorrichtung frei von dem ersten Rahmenmodul gebildet ist.

Der modulartige Aufbau der Anordnung von Tank-Rahmen-Modulen ermöglicht es, die landwirtschaftliche Verteilmaschine für unterschiedliche Aufgaben bei der landwirtschaftlichen Feldbearbeitung flexibel herzurichten, indem die Anordnung jeweils mit der gewünschten Anzahl von Tank-Rahmen-Modulen ausgebildet wird. So kann vorgesehen sein, eine bestehende Anordnung von Tank-Rahmen-Modulen um ein oder mehrere Tank-Rahmen-Module zu verlängern oder zu verkürzen. Auch ermöglicht es der vorgesehene Aufbau der landwirtschaftlichen Verteilmaschine mit den Tank-Rahmen-Modulen, ein oder mehrere Tank-Rahmen-Module auszutauschen, um bei gleichbleibender Anzahl von Tank-Rahmen-Modulen in der Anordnung für das zu verteilende Material angepasste Tanks in der Anordnung bereitzustellen.

Es kann vorgesehen sein, dass bei den Tank-Rahmen-Modulen der Tank jeweils lösbar auf dem zugeordneten Rahmenmodul angeordnet ist.

Bei der Anordnung von Tank-Rahmen-Modulen können die Tank-Rahmen-Module in Fahrtrichtung hintereinanderliegend angeordnet sein.

Das zumindest eine erste Tank-Rahmen-Modul kann wiedereinsetzbar aus der Anordnung von Tank-Rahmen-Modulen herausgelöst werden.

Die getrennten Tanks der Tankanordnung können separat oder getrennt auf dem jeweils zugeordneten Rahmenmodul befestigt sein, ohne dass zwischen benachbarten Tanks in der Tankanordnung Befestigungsverbindungen ausgebildet sind.

Bei den Tank-Rahmen-Modulen kann der auf dem zugeordneten Rahmenmodul angeordnete Tank jeweils wenigstens durch eine deckseitige Tanköffnung von oben befüllbar sein. Ein Tankausgang, über den das im Tank aufgenommene Material ausbringbar ist, kann auf einer Unterseite des Tanks angeordnet sein, insbesondere im Bereich des zugeordneten Rahmen-moduls. Alternativ oder ergänzend können ein oder mehrere Tankdeckel vorgesehen sein, welche jeweils eine Tanköffnung verschließen, die seitlich am Tank gebildet ist. Bei einer oder mehreren Tanköffnungen kann die Möglichkeit zum Anschließen einer Transportleitung vorgesehen sein, zum Beispiel zum Befüllen des Tanks.

Die getrennten Tanks der Tankanordnung können eingerichtet sein, mindestens zwei unterschiedliche zu verteilende Materialien aus der folgenden Gruppe getrennt aufzunehmen: Saatgut, flüssiges Düngematerial und festes Düngematerial. Alternativ können die Tanks der Tankanordnung in einer Ausführung eingerichtet sein, jeweils das gleiche auszubringende Material aufzunehmen, so dass dieses mittels mehrerer Tanks in größer Menge bereitstellbar ist.

Die Tank-Rahmen-Module können jeweils eine Dosiereinrichtung aufweisen, die eingerichtet ist, dass in dem jeweiligen Tank aufgenommene zu verteilende Material zu dosieren. Mithilfe der Dosiereinrichtung wird das im jeweiligen Tank aufgenommene Material zum Ausbringen dosiert, insbesondere zum Verteilen auf dem Feld. Die Dosiereinrichtung kann innerhalb des Tankausgangs oder benachbart hierzu im oder außerhalb des Tanks angeordnet sein, um das über den Tankausgang aus dem Tank auszubringende Material zu dosieren. Derartige Dosiereinrichtungen sind in Verbindung mit landwirtschaftlichen Verteilmaschinen als solche in unterschiedlichen Ausführungsformen bekannt. Die Dosiereinrichtung kann hierbei eingerichtet sein, flüssiges und / oder festes Material zu dosieren, insbesondere granulares Material.

Bei den Tank-Rahmen-Modulen kann ein Tankausgang des Tanks jeweils über eine Zuführleitung mit einer Verteileinrichtung verbunden sein, derart, dass das im Tank aufgenommene zu verteilende Material über die Zuführleitung der Verteileinrichtung zugeführt werden kann. Ein Tank eines Tank-Rahmen-Moduls kann mithilfe der Zuführleitung mit einer oder mehreren Verteileinrichtungen verbunden sein. Besteht eine Verbindung zu mehreren Verteileinrichtungen, können diese das gleiche Material aus dem Tank ausbringen oder verteilen.

Über die Zuführleitung kann zum Beispiel ein flüssiges Material zu der Verteileinrichtung fließen, wobei die Verteileinrichtung dann eine Spritzeinrichtung sei kann. In einem anderen Ausführungsbeispiel kann über die Zuführleitung ein granulares Material wie Saatgut oder festes Düngermaterial mithilfe eines Fluidstroms, insbesondere eines Luftstroms, vom Tankausgang zu der Verteileinrichtung transportiert werden.

Hierbei kann vorgesehen sein, dass wenigstens zwei Tanks der Tank-Rahmen-Module eingerichtet sind, unterschiedliche Materialien aufzunehmen und für die Verteilung bereitzustellen, insbesondere unterschiedliche zu verteilende Materialien jeweils für die Verteilung zu dosiert bereitzustellen. So kann in einer Ausgestaltung vorgesehen sein, das ein erster Tank eines ersten Tank-Rahmen-Moduls eingereichte oder betreibbar ist, ein erstes zu verteilendes Material aufzunehmen und dosiert bereitzustellen, insbesondere ein festes zu verteilendes Material, und das ein zweiter Tank eines zweiten Tank-Rahmen-Moduls eingereichte oder betreibbar ist, ein zweites zu verteilendes Material aufzunehmen und dosiert bereitzustellen, insbesondere ein flüssiges zu verteilendes Material, welches von dem ersten zu verteilenden Material verschieden ist. Das erste und das zweite Tank-Rahmen-Modul weisen dann eine für das jeweilige zu verteilende Material eingerichtete Dosiereinrichtung mit zugeordneter Zuführleitung zu einer oder mehreren Verteileinrichtungen auf.

Die Zuführleitung kann in den verschiedenen Ausführungsformen abschnittsweise unterhalb und / oder innerhalb des Hauptrahmens zwischen dem Tankausgang und der Verteileinrichtung verlaufen. Die Zuführleitung kann lösbar am Hauptrahmen befestigt sein, was zum Beispiel einen Austausch der Zuführleitung ermöglicht, wenn nach dem Austauschen oder dem Hinzufügen eines Tank-Rahmen-Moduls in der Anordnung von Tank-Rahmen-Modulen eine geänderte oder eine neue Zuführleitung benötigt werden.

Die Verteileinrichtung kann eingerichtet sein, Saatgut und / oder Düngermaterial auszubringen. In Verbindung mit zu verteilendem Düngematerial kann die Verteileinrichtung zum Beispiel mit einer Spritzeinrichtung oder einem Düngerstreuer gebildet sein.

Die Verteileinrichtung kann auf einer Säreihe angeordnet sein. Auf der Säreihe können ein oder mehrere Verteileinrichtungen angeordnet sein, beispielsweise eine Verteileinrichtung für Saatgut sowie zusätzlich eine Verteileinrichtung zum Ausbringen von Düngermaterial. Die landwirtschaftliche Verteilmaschine kann einer Anordnung von Säreihen mit jeweiliger Verteileinrichtung aufweisen, die sich quer zur Fahrtrichtung erstrecken kann. Das mithilfe der Säreihen auszubringende Material wird in den Tanks der Tankanordnung bereitgestellt.

Die Zugvorrichtung kann mit einer Deichsel bereitgestellt sein, die weiterhin eine Lenkvorrichtung umfasst. Bei dieser Ausführungsform stellt die Deichsel zusätzlich eine Lenkmöglichkeit bereit.

Die Zugvorrichtung kann mit dem Hauptrahmen lösbar verbunden sein. Die Zugvorrichtung kann zum Beispiel mittels einer Schraubverbindung mit dem Hauptrahmen lösbar verbunden sein. Beispielsweise ist die Zugvorrichtung an einem in Fahrtrichtung frontseitigem Rahmen-modul des Hauptrahmens lösbar montiert. Hierbei kann es sich um das zumindest eine erste Tank-Rahmen-Modul handeln. Wenn dieses aus der Anordnung von Tank-Rahmen-Modulen herauszulösen ist, kann die Zugvorrichtung hiervon gelöst werden, um sie dann an einem verbleibenden Tank-Rahmen-Modul in der Anordnung zu montieren. Ähnlich verhält es sich, wenn in der Anordnung von Tank-Rahmen-Modulen ein neues oder weiteres Tank-Rahmen-Modul fronseitig eingesetzt wird, mit dem dann die Zugvorrichtung verbunden werden kann.

Der Hauptrahmen kann als Teil eines Verteilmaschinen-Chassis gebildet sein.

Die Rahmenmodule können jeweils mit einem Rahmenmodulgestell gebildet sein. Das Rahmenmodulgestell kann mit einem oder mehreren Gestellelementen oder -bauteilen gebildet sein, zum Beispiel Rohr- oder Profilelementen.

In dem Tank-Rahmen-Modul kann der Tank oberhalb des zugeordneten Rahmenmodulgestells angeordnet sein. Beispielsweise ist der Tank auf das Rahmenmodulgestell aufgesetzt oder steht hierauf, wobei insbesondere eine lösbare Montage vorgesehen sein kann. Der Tank kann mehrere Standfüße aufweisen, die auf dem Rahmenmodul lagern.

Das Rahmenmodulgestell kann mit mehreren sich jeweils in horizontaler Ebene erstreckenden Gestellelementebenen gebildet sein, die über vertikal verlaufende Gestellelemente miteinander verbunden sind. Auf diese Weise ist beispielsweise ein Hauptrahmen mit übereinander liegenden Gestellebenen ausbildbar.

Die Rahmenmodule des Hauptrahmens können mittels wenigstens einer Verbindung aus der folgenden Gruppe miteinander lösbar verbunden sein: Steckverbindung, Schraubverbindung und Gelenkverbindung.

Die Tank-Rahmen-Module können jeweils eine begehbare Plattform aufweisen. Die begehbare Plattform kann seitlich des Tanks des Tank-Rahmen-Moduls angeordnet sein. Die begehbare Plattform kann auf nur einer Seite des Tanks oder auf wenigstens zwei Seiten des Tanks ausgebildet sein, zum Beispiel auf gegenüberliegenden Seiten. Die begehbare Plattform ermöglicht es einem Nutzer, sich seitlich des Tanks hinzustellen und so zum Beispiel eine Tanköffnung einzusehen, die sich beispielsweise auf der Ober- oder Deckseite des Tanks befindet.

Die begehbare Plattform kann mit einem Metallgitter hergestellt sein, auf dem eine Lauffläche ausgebildet ist. In einer Ausführungsform ist die begehbare Plattform lösbar oder abnehmbar montiert, wobei zum Beispiel eine lösbare Montage an dem Rahmenmodul des jeweiligen Tank-Rahmen-Moduls vorgesehen sein kann. In einer Ausgestaltung ist die begehbare Plattform zwischen einer eingeklappten und einer ausgeklappten Stellung verlagerbar, insbesondere schwenkbar. In der ausgeklappten Stellung kann die begehbare Plattform in einer horizontalen Ebene verlaufen, während die begehbare Plattform in der eingeklappten Stellung aufrechtstehend angeordnet sein kann, insbesondere seitlich des Tanks.

Der begehbaren Plattform kann ein aufrechtstehendes Geländer zugeordnet sein. Das aufrechtstehende Geländer kann mit mehreren Geländerelementen gebildet sein, zum Beispiel Geländerstäben. Das aufrechtstehende Geländer kann in Bezug auf den Tank außenseitig an der begehbaren Plattform angeformt sein. Mit dem aufrechtstehenden Geländer kann ein Handlauf für den Nutzer bereitgestellt sein.

Mit den begehbaren Plattformen von in der Anordnung von Tank-Rahmen-Modulen benachbart zueinander angeordneten Tank-Rahmen-Modulen kann ein begehbarer Übergang zwischen den begehbaren Plattformen bereitgestellt werden. Die begehbaren Plattformen benachbarter Tank-Rahmen-Module können aneinanderstoßen oder in einem Abstand angeordnet sein, welcher von dem Benutzer beim Laufen entlang der begehbaren Plattform bequem überschritten werden kann. Entlang der Anordnung von Tank-Rahmen-Modulen ist so eine durchgehende begehbare Plattform ausbildbar.

Es kann ein zweites Tank-Rahmen-Modul vorgesehen sein, bei dem ein zweiter Tank der Tankanordnung auf einem zugeordneten zweiten Rahmenmodul des Hauptrahmens angeordnet ist, und welches aus der Anordnung von Tank-Rahmen-Modulen herauslösbar ist, derart, dass nach dem Herauslösen des zweiten Tank-Rahmen-Moduls eine verkürzte Anordnung von einem oder mehreren verbleibenden Tank-Rahmen-Modulen frei von dem zweiten Tank-Rahmen-Modul ausbildbar ist, wobei hierbei der Hauptrahmen mit der hiermit verbundenen Zugvorrichtung frei von dem zweiten Rahmenmodul ausbildbar ist. In Verbindung mit dem zweiten Tank-Rahmen-Modul gelten die im Zusammenhang mit dem zumindest einen ersten Tank-Rahmen-Modul gemachten Erläuterungen zu unterschiedlichen Ausführungsformen entsprechend. Mittels des zweiten Tank-Rahmen-Moduls ist das Herauslösen von wenigstens zwei Tank-Rahmen-Modulen aus der oder das Einsetzen von mindestens zwei Tank-Rahmen-Modulen in die Anordnung von Tank-Rahmen-Modulen ermöglicht. In einer Ausführungsform sind sämtliche Tank-Rahmen-Module der Anordnung von Tank-Rahmen-Modulen herauslösbar und wieder einsetzbar in die Anordnung.

In einer Ausgestaltung kann vorgesehen sein, dass zumindest eines der Tank-Rahmen-Module, in der Anordnung von Tank-Rahmen-Modulen, nicht lösbar oder austauschbar aufgenommen oder angeordnet ist, zum Beispiel ein in Fahrtrichtung heckseitig letztes Tank-Rahmen-Modul. Hierbei kann das zugeordneten Rahmenmodul des nicht austauschbaren oder nicht herausnehmbaren Tank-Rahmen-Moduls nicht herausnehmbar am Hauptrahmen gebildet sein.

Die landwirtschaftliche Verteilmaschine kann als Sämaschine, Spritzmaschine oder Düngerstreuer ausgeführt sein. Mithilfe der Spritzmaschine kann zum Beispiel ein flüssiges Düngermaterial und / oder ein Pflanzenschutzmittel verteilt werden. Düngerstreuer dienen dazu, insbesondere granulares festes Düngematerial zu verteilen, zum Beispiel Mikrogranulat. Die Sämaschine ist eingerichtet, mithilfe der einen oder der mehreren Verteileinrichtungen Saatgut auszubringen. Ergänzend kann vorgesehen sein, dass mithilfe der Sämaschine nicht nur Saatgut, sondern auch Düngermaterial ausgebracht wird. Mithilfe der Anordnung von Tank-Rahmen-Modulen kann eine jeweils gewünschte Anordnung von Tanks flexibel bereitgestellt werden.

Es kann vorgesehen sein, dass einem oder mehreren der Tanks jeweils ein Füllstandüberwachungseinrichtung zugeordnet ist, mit der der jeweilige Füllstand in dem Tank erfasst und überwacht werden kann. Alternativ oder ergänzend können einer oder mehrere der Tanks einen Restmengensensor aufweisen.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer landwirtschaftlichen Verteilmaschine;
- Fig. 2: eine schematische Darstellung der landwirtschaftlichen Verteilmaschine aus Fig. 1 von der Seite;
- Fig. 3: eine schematische perspektivische Darstellung eines Tank-Rahmen-Moduls der landwirtschaftlichen Verteilmaschine aus den Fig. 1 und 2;
- Fig. 4: eine schematische Darstellung einer landwirtschaftlichen Verteilmaschine mit einer verkleinerten Anordnung von Tank-Rahmen-Modulen gegenüber der landwirtschaftlichen Verteilmaschine aus Fig. 1 und
- Fig. 5: eine schematische Darstellung einer landwirtschaftlichen Verteilmaschine mit einer weiter verkleinerten Anordnung von Tank-Rahmen-Modulen.

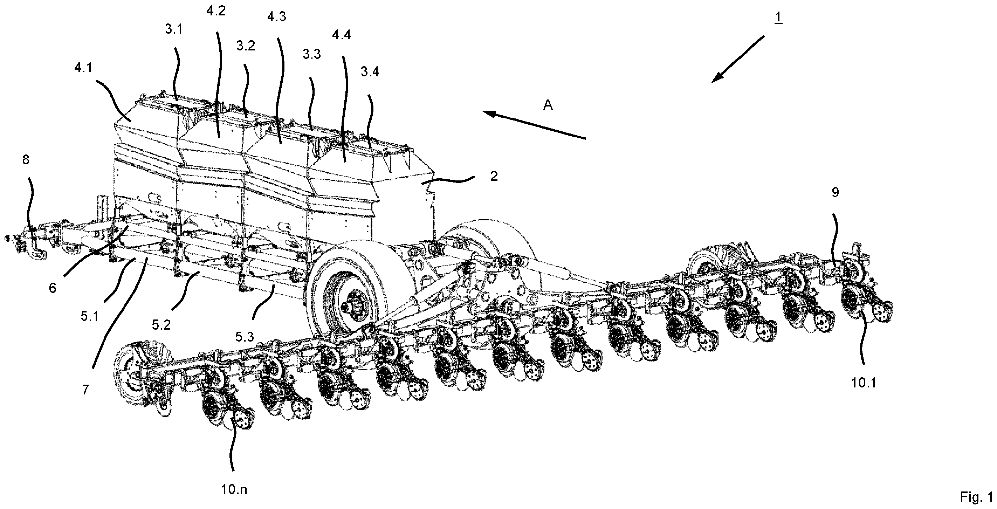

Fig. 1 zeigt eine schematische perspektivische Darstellung einer landwirtschaftlichen Verteilmaschine 1, die im gezeigten Beispiel als eine Sämaschine ausgeführt ist. Die landwirtschaftliche Verteilmaschine 1 weist ein modulartiges Tanksystem mit einer Anordnung 2 von vier Tank-Rahmen-Modulen 3.1, ..., 3.4 auf. Die Tank-Rahmen-Module 3.1, ..., 3.4 sind beim gezeigten Ausführungsbeispiel in einer Fahrtrichtung A hintereinanderliegend angeordnet.

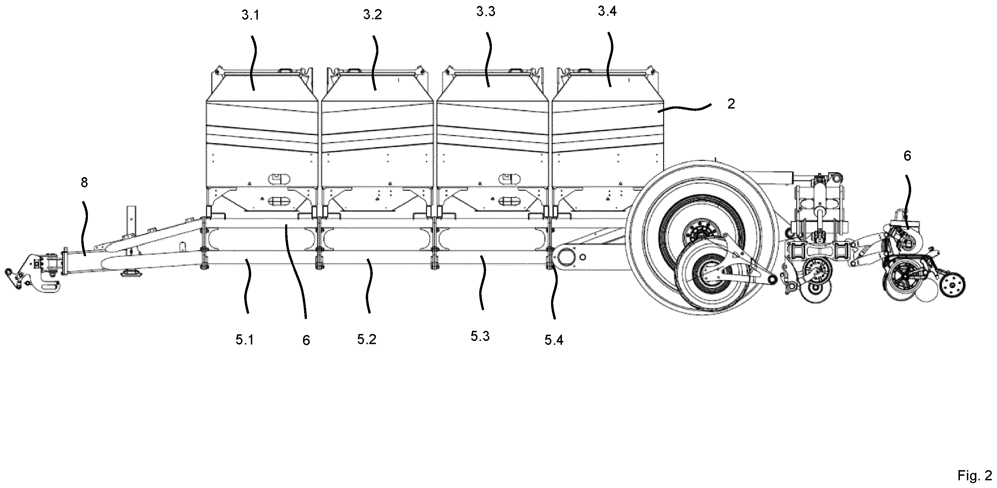

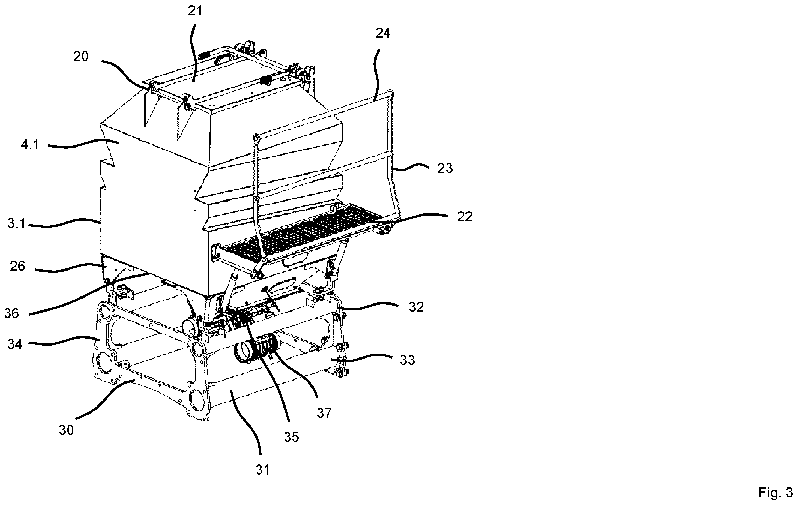

Fig. 2 zeigt die landwirtschaftliche Verteilmaschine 1 in Seitenansicht. Fig. 3 zeigt eine schematische perspektivische Darstellung für eines ersten Tank-Rahmen-Moduls 3.1 der Anordnung 2 von Tank-Rahmen-Modulen 3.1, ..., 3.4.

Die Tank-Rahmen-Module 3.1, ..., 3.4 weisen einen jeweiligen Tank 4.1, ..., 4.4 auf, welcher auf einem zugeordneten Rahmenmodul 5.1, ..., 5.4 angeordnet ist, insbesondere lösbar. Bei der landwirtschaftlichen Verteilmaschine 1 in den Fig. 1 und 2 sind die Rahmenmodule 5.1, ..., 5.4 lösbar miteinander verbunden und bilden einen Hauptrahmen 6, welcher als Teil eines Chassis 7 der landwirtschaftlichen Verteilmaschine 1 gebildet ist. Der Hauptrahmen 6 ist frontseitig mit einer Zugvorrichtung 8 verbunden, über die die landwirtschaftliche Verteilmaschine 1 an ein Zugfahrzeug (nicht dargestellt) wie einen Schlepper oder einen Traktor koppelbar ist. Die Zugvorrichtung 8 kann als Deichsel ausgeführt sein, mit der eine Lenkvorrichtung bereitgestellt sein kann.

Gemäß Fig. 1 weist die landwirtschaftliche Verteilmaschine 1 weiterhin eine Anordnung 9 mit mehreren einzelnen Säreihen 10.1, ..., 10.n (n>1) auf, die sich quer zur Fahrtrichtung A erstreckt. Mithilfe der Säreihen 10.1, ..., 10.n wird jeweils ein Saatgut ausgebracht oder verteilt. Optional kann vorgesehen sein, mithilfe der Säreihen 10.1, ..., 10.n jeweils auch ein Düngermaterial auszubringen. Saatgut und Düngermaterial werden in den Tanks 4.1, ..., 4.4 aufgenommen und über entsprechende Zuführleitungen zu den Säreihen 10.1, ..., 10.n transportiert, wie dies als solches bekannt ist.

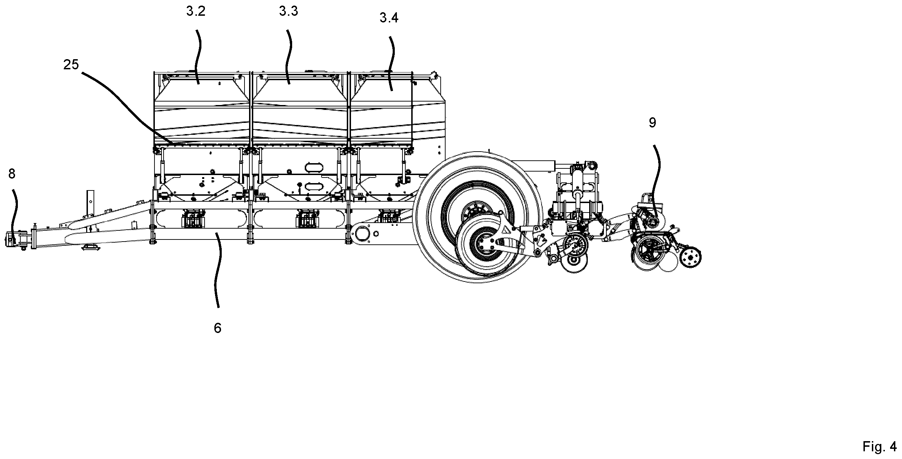

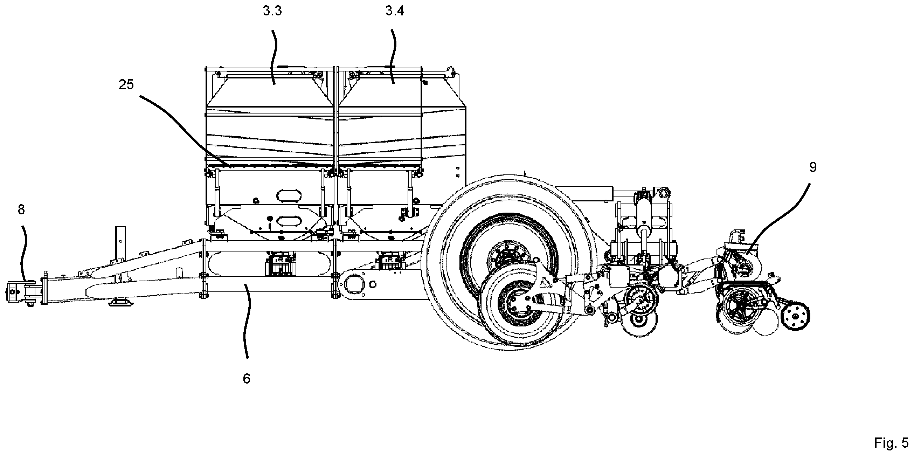

Die Tank-Ramen-Module 3.1, ..., 3.4 sind lösbar miteinander verbunden, insbesondere die Rahmenmodule 5.1, ..., 5.4, was es ermöglicht, die Anordnung 2 von Tank-Rahmen-Modulen 3.1, ..., 3.4 zu verkleinern (verkürzen) oder zu erweitern (verlängern). Die Fig. 4 und 5 zeigen schematische Darstellungen der landwirtschaftlichen Verteilmaschine 1, wobei dort im Vergleich zur Ausführung in den Fig. 1 und 2 ein oder zwei der Tank-Rahmen-Module 3.1, ..., 3.4 herausgelöst sind, insbesondere wiedereinsetzbar in die Anordnung 2. Hierzu werden insbesondere die lösbaren Verbindungen zwischen den benachbarten Rahmenmodulen 5.1, ..., 5.4 gelöst, um das jeweilige Tank-Rahmen-Modul aus der Anordnung 2 herauszunehmen. Anschließend können die verbleibenden Rahmenmodule mittels der lösbaren Verbindungen bedarfsweise zusammengefügt werden, sodass der Hauptrahmen 6 mit einer geringeren Anzahl der Rahmenmodulen 5.1, ..., 5.4 gebildet ist und die Zugvorrichtung 8 die beim Anhängen der Verteilmaschine 1 an ein Zugfahrzeug eingeleitete Zugkraft (immer noch) entsprechend auf den Hauptrahmen 6 einleiten kann. Es kann vorgesehen sein, dass das heckseitig letzte Tank-Rahmen-Modul 3.4 nicht lösbar oder nicht herausnehmbar ausgebildet ist, so dass dieses regelmäßig verbleibt, wohingegen die anderen Tank-Rahmen-Module 3.1 ... 3.3 aus der Anordnung herausnehmbar sind.

Gemäß Fig. 3 weist der erste Tanks 4.1 des ersten Tank-Rahmen-Moduls 3.1, wie auch die übrigen Tanks 4.2, ..., 4.4, eine oberseitige Tanköffnung 20 auf, die mit einem Tankdeckel 21 verschließbar ist, welcher am ersten Tank 4.1 schwenkbar angebracht ist. Alternativ oder ergänzend kann ein Tankdeckel, welcher eine Tanköffnung verschließt, seitlich am Tank vorgesehen sein. Bei einer oder mehreren Tanköffnungen kann die Möglichkeit zum Anschließen einer Transportleitung vorgesehen sein, zum Beispiel zum Befüllen des Tanks.

Seitlich des ersten Tanks 4.1 ist eine begehbare Plattform 22 angeordnet, die es einem Nutzer ermöglicht, sich seitlich des Tanks aufzustellen, um die Tanköffnung 20 einzusehen. Der begehbaren Plattform 22 ist ein aufrechtstehendes Geländergestell 23 zugeordnet, an dem ein Handlauf 24 gebildet ist.

Insbesondere aus den Fig. 4 und 5 ergibt sich, dass eine durchgehend begehbare Plattform 25 gebildet ist, wenn die Tank-Rahmen-Module 3.1, ..., 3.4 nebeneinander angeordnet sind.

An dem ersten Tank 4.1 sind Standfüße 26 gebildet, die auf dem Rahmenmodul 5.1 lagern oder stehen.

Gemäß Fig. 3 ist das Rahmenmodul 5.1 mit einem Rahmengestell 30 ausgeführt, welches Gestellelemente 31 aufweist, mit denen im gezeigten Beispiel in horizontaler Ebene eine obere und eine untere Gestellebene 32, 33 gebildet sind, die über vertikale Gestellelemente 34 verbunden sind. Die Gestellelemente 31, 34 können zum Beispiel als Rohr- und / oder Profilelemente ausgeführt sein.

Ein Tankausgang 35 ist auf einer Unterseite 36 des ersten Tanks 4.1 gebildet. Zum Übertragen des auszubringenden Materials wird der Tankausgang 35 mit der Zuführleitung (nicht dargestellt) verbunden, zum Beispiel einer Rohrleitung, um das Material zur Verteileinrichtung auf einer der Säreihe 10.1, ..., 10.n zu transportieren, sei es als flüssiges Material oder granulares Material mittels eines Luftstroms.

Die in der vorstehenden Beschreibung, den Ansprüchen sowie der Zeichnung offenbarten

Merkmale können sowohl einzeln als auch in beliebiger Kombination für die Verwirklichung der verschiedenen Ausführungen von Bedeutung sein.

## Patentansprüche

1. Landwirtschaftliche Verteilmaschine (1) mit modularem Tanksystem, aufweisend:
- einen Hauptrahmen (6), bei dem Rahmenmodule (5.1, ..., 5.4) lösbar miteinander verbunden sind;
- eine Zugvorrichtung (8), die an ein Zugfahrzeug koppelbar und mit dem Hauptrahmen (6) verbunden ist, derart, dass eine Zugkraft über die Zugvorrichtung (8) auf den Hauptrahmen (6) einleitbar ist;
- eine Tankanordnung, die mit getrennten Tanks (4.1, ..., 4.2) gebildet ist, die jeweils eingerichtet sind, ein zu verteilendes Material wie Saatgut, Düngermaterial oder dergleichen aufzunehmen; und
- eine die Tankanordnung umfassende Anordnung von Tank-Rahmen-Modulen (3.1, ..., 3.4), bei denen jeweils ein Tank der Tankanordnung auf einem zugeordneten Rahmenmodul des Hauptrahmens (6) angeordnet ist;
wobei zumindest ein erstes Tank-Rahmen-Modul, bei dem ein erster Tank (4.1) der Tankanordnung auf einem zugeordneten ersten Rahmenmodul (5.1) des Hauptrahmens (6) angeordnet ist, aus der Anordnung von Tank-Rahmen-Modulen (3.1, ..., 3.4) herauslösbar ist, derart, dass nach dem Herauslösen des zumindest einen ersten Tank-Rahmen-Moduls (3.1) eine verkürzte Anordnung von einem oder mehreren verbleibenden Tank-Rahmen-Modulen (3.2, ..., 3.4) frei von dem zumindest einen ersten Tank-Rahmen-Modul (3.1) ausbildbar ist, wobei hierbei der Hauptrahmen (6) mit der hiermit verbundenen Zugvorrichtung (8) frei von dem ersten Rahmenmodul (5.1) gebildet ist.

2. Landwirtschaftliche Verteilmaschine (1) nach Anspruch 1, dadurch **gekennzeich- net**, dass die Tank-Rahmen-Module (3.1, ..., 3.4) jeweils eine Dosiereinrichtung aufweisen, die eingerichtet ist, dass in dem jeweiligen Tank (4.1, ..., 4.4) aufgenommene zu verteilende Material zu dosieren.

3. Landwirtschaftliche Verteilmaschine (1) nach Anspruch 1 oder 2, dadurch **gekenn-zeichnet**, dass bei den Tank-Rahmen-Modulen (3.1, ..., 3.4) ein Tankausgang (35) des Tanks (4.1, ..., 4.4) jeweils über eine Zuführleitung mit einer Verteileinrichtung verbunden ist, derart, dass das im Tank (4.1, ..., 4.4) aufgenommene zu verteilende Material über die Zuführleitung der Verteileinrichtung zugeführt werden kann.

4. Landwirtschaftliche Verteilmaschine (1) nach Anspruch 3, dadurch **gekennzeich- net**, dass die Verteileinrichtung eingerichtet ist, Saatgut und / oder ein Düngermaterial auszubringen.

5. Landwirtschaftliche Verteilmaschine (1) nach Anspruch 3 oder 4, dadurch **gekenn- zeichnet**, dass die Verteileinrichtung auf einer Säreihe (10.1; ...; 10.n) angeordnet ist.

6. Landwirtschaftliche Verteilmaschine (1) nach mindestens einem der vorangehenden Ansprüche, **dadurch gekennzeichnet, dass** die Zugvorrichtung (8) mit einer Deichsel bereitgestellt ist, die weiterhin eine Lenkvorrichtung umfasst.

7. Landwirtschaftliche Verteilmaschine (1) nach mindestens einem der vorangehenden Ansprüche, **dadurch gekennzeichnet, dass** die Zugvorrichtung (8) mit dem Hauptrahmen (6) lösbar verbunden ist.

8. Landwirtschaftliche Verteilmaschine (1) nach mindestens einem der vorangehenden Ansprüche, **dadurch gekennzeichnet, dass** der Hauptrahmen (6) als Teil eines Verteilmaschinen-Chassis (7) gebildet ist.

9. Landwirtschaftliche Verteilmaschine (1) nach mindestens einem der vorangehenden Ansprüche, **dadurch gekennzeichnet, dass** die Rahmenmodule (5.1, ..., 5.4) jeweils mit einem Rahmenmodulgestell (30) gebildet sind.

10. Landwirtschaftliche Verteilmaschine (1) nach mindestens einem der vorangehenden Ansprüche, **dadurch gekennzeichnet, dass** die Rahmenmodule (5.1, ..., 5.4) des Hauptrahmens (6) mittels wenigstens einer Verbindung aus der folgenden Gruppe miteinander lösbar verbunden sind: Steckverbindung, Schraubverbindung und Gelenkverbindung.

11. Landwirtschaftliche Verteilmaschine (1) nach mindestens einem der vorangehenden Ansprüche, **dadurch gekennzeichnet, dass** die Tank-Rahmen-Module (3.1, ..., 3.4) jeweils eine begehbare Plattform (22) aufweisen.

12. Landwirtschaftliche Verteilmaschine (1) nach Anspruch 11, dadurch **gekennzeich- net**, dass der begehbaren Plattform (22) ein aufrechtstehendes Geländer (23) zugeordnet ist.

13. Landwirtschaftliche Verteilmaschine (1) nach Anspruch 11 oder 12, dadurch **gekenn- zeichnet**, dass mit begehbaren Plattformen (22) von in der Anordnung von Tank-Rahmen-Modulen (3.1, ..., 3.4) benachbart zueinander angeordneten Tank-Rahmen-Modulen ein begehbarer Übergang zwischen den begehbaren Plattformen (22) bereitgestellt ist.

14. Landwirtschaftliche Verteilmaschine (1) nach mindestens einem der Ansprüche, **dadurch gekennzeichnet, dass** ein zweites Tank-Rahmen-Modul (3.2), bei dem ein zweiter Tank (4.2) der Tankanordnung auf einem zugeordneten zweiten Rahmenmodul (5.2) des Hauptrahmens (6) angeordnet ist, aus der Anordnung von Tank-Rahmen-Modulen (3.1, ..., 3.4) herauslösbar ist, derart, dass nach dem Herauslösen des zweiten Tank-Rahmen-Moduls (3.2) eine verkürzte Anordnung von einem oder mehreren verbleibenden Tank-Rahmen-Modulen (3.3, 3.4) frei von dem zweiten Tank-Rahmen-Modul (3.2) ausbildbar ist, wobei hierbei der Hauptrahmen (6) mit der hiermit verbundenen Zugvorrichtung (8) frei von dem zweiten Rahmenmodul (5.2) gebildet ist.

15. Landwirtschaftliche Verteilmaschine (1) nach mindestens einem der Ansprüche, ausgeführt als Sämaschine, Spritzmaschine oder Düngerstreuer.
